**Europäisches Patentamt**

**European Patent Office**

**Office européen des brevets**

(19)

(11) Veröffentlichungsnummer : **0 052 385 B1**

## (12) EUROPÄISCHE PATENTSCHRIFT

(45) Veröffentlichungstag der Patentschrift :
**13.06.84**

(21) Anmeldenummer : **81201079.1**

(22) Anmeldetag : **29.09.81**

(51) Int. Cl.³ : **H 02 K 9/28, H 01 R 39/08**

(54) **Schleifringanordnung für elektrische Maschinen.**

(30) Priorität : **13.11.80 CH 8417/80**

(43) Veröffentlichungstag der Anmeldung :
**26.05.82 Patentblatt 82/21**

(45) Bekanntmachung des Hinweises auf die Patenterteilung : **13.06.84 Patentblatt 84/24**

(84) Benannte Vertragsstaaten :
**AT CH DE FR GB IT LI SE**

(56) Entgegenhaltungen :
**CH-A-   410 152
CH-A-   524 267
DE-A- 1 488 655
DE-A- 2 056 898
DE-A- 2 405 884
DE-B- 1 252 308
FR-A- 2 406 902
US-A- 3 784 855
US-A- 4 137 474**

(73) Patentinhaber : **BBC Aktiengesellschaft Brown, Boveri & Cie.
Haselstrasse
CH-5401 Baden (CH)**

(72) Erfinder : **Thoma, Kurt
In den Wyden 4
CH-5242 Birr (CH)**

**Beschreibung**

Die Erfindung bezieht sich auf eine Schleifringanordnung für elektrische Maschinen gemäss dem Oberbegriff des Anspruchs 1. Eine derartige Anordnung ist aus der DE-AS 1 488 655 bekannt.

Die Stromübertragung von Bürsten auf Schleifringe ist mit Verlusten behaftet, und zwar in Form von Reibungs- und Stromübergangsverlusten, wobei die entstehenden Wärmemengen durch eine Ventilation abgeführt werden müssen, die sich nach der Höhe der vorkommenden Verluste richtet. Bei den üblichen Kühlanordnungen für Schleifringe wird eine Luftströmung entlang der Bürstenoberfläche und gegebenenfalls auch durch axiale und/oder radiale Kanäle in den Schleifringen geführt.

Bei Schleifringanordnungen für Turbogeneratoren, wie sie beispielsweise aus der CH-PS 443 468 bekannt sind, sind zwischen zwei Schleifringen drei Radialventilatoren vorgesehen, wobei der mittlere durch axiale Bohrungen in beiden Schleifringen und die aussenliegenden Ventilatoren entlang der Oberfläche je eines Schleifringes Frischluft ansaugen und die erwärmte Luft nach aussen befördern.

Die CH-PS 410 152 betrifft eine Schleifringanordnung mit einer Einrichtung zur Kühlung der Schleifringe mittels eines durch Kanäle der Schleifringe geblasenen Kühlmittels, wobei in der Schleifringoberfläche vorhandenen Nuten oder Rillen achsparallele Kanäle im Schleifringkörper anschneiden, welchen Kanälen über annähernd radial verlaufende Kanäle das gasförmige Kühlmittel zugeleitet wird. In Weiterbildung dieser bekannten Schleifringanordnung wird in der DE-OS 24 26 823 vorgeschlagen, die Kühlmittelströmung durch die genannten Kanäle durch einen zwischen den Schleifringen angeordneten Radiallüfter zu forcieren.

Bei Schleifringanordnungen für Asynchronmaschinen, bei denen in der Regel drei vergleichsweise dicht nebeneinanderliegende Schleifringe vorhanden sind, lassen sich die bei Turbogeneratoren bekannten Kühlkonzepte praktisch nicht verwirklichen. In den meisten Fällen ist der zwischen den einzelnen Schleifringen vorhandene Raum zu knapp, um Ventilatoren und entsprechende Kühlmittelstromleiteinrichtungen unterzubringen. Es hat daher in der Vergangenheit nicht an Versuchen gefehlt, das Problem der Kühlung mehrerer nebeneinanderliegender Schleifringe zu lösen.

So wird in der DE-PS 504 351 eine Anordnung zur Kühlung der Schleifringe und zur Entfernung des Bürstenstaubes beschrieben, bei der ein als Hohlkörper ausgebildeter Schleifringträger an einem axialen Ende mit einer Luftsaughose in Verbindung steht und an seinem Umfang mit zwischen den Schleifringen liegenden Lufteintrittsöffnungen versehen ist. Zur gezielten Luftführung sind am Schleifringträger ausserhalb der Lufteintrittsöffnungen besondere Luftführungsaufsätze angebracht. Die Lustsaughose ist an eine Saugluftleitung angeschlossen. Diese bekannte Lösung ist konstruktiv aufwendig, führt zu einer nicht unerheblichen Vergrösserung des Schleifringdurchmessers und weist insbesondere den Nachteil auf, dass sie keine unmittelbare Kühlung der Laufffläche des Schleifrings gestattet.

Bei einer aus der DE-AS 14 88 655 bekannten Schleifringanordnung für elektrische Maschinen mit mehreren nebeneinander angeordneten Schleifringen sind in diese Kanäle eingearbeitet, die mit Eintritts- und Austrittsöffnungen zur Zu- und Abführung eines gasförmigen Kühlmittels versehen sind. Die Schleifringe sind hohl ausgebildet, und der Innenraum ist über die Eintrittsöffnungen an mehreren längs des Umfangs verteilten Stellen mit isolierten Rohren verbunden, die jeweils zur Stirnfläche des äussersten Schleifrings führen. Die Austrittsöffnungen sind dabei durch schräge, radial nach aussen führende Bohrungen in den Stirnwänden des Schleifrings gebildet. Alternativ können auch vom Innenraum der Schleifringe Bohrungen zur Schleifringoberfläche führen, wobei nach den Angaben der Ausleschrift die Bürsten so angeordnet werden müssen, dass sie diese Austrittsöffnungen nicht überdecken.

Die bekannte Schleifringanordnung ermöglicht zwar eine gezielte Kühlmittelströmung zu den einzelnen Schleifringen, doch haften ihr im wesentlichen zwei Nachteile an : zum einen erhöht sich der konstruktive Aufwand durch die Ausbildung der Schleifring als Hohlkörper erheblich, zum anderen verursacht die beschriebene Kühlmittelströmung eine gravierende Verschmutzung des Bürstenraumes, was einerseits die Bewegungsfreiheit der Bürsten in ihren Haltern beeinträchtigen kann, und andererseits die Isolation gefährdet, d. h. den Kriechstromwiderstand erheblich vermindert. Darüber hinaus wird die heute angestrebte Kühlmittelzu- oder -abfuhr möglichst durch die Laufffläche der Bürsten geführt und damit die Abfuhr der Wärme unmittelbar am Ort ihrer Entstehung ausgedrücklich ermöglicht.

Der Erfindung liegt die Aufgabe zugrunde, eine Schleifringanordnung zu schaffen, welche die Nachteile des Bekannten nicht aufweist, eine hochwirksame Kühlung der Schleifringe insbesondere in ihrem oberflächigen Bereich ermöglicht, die Verschmutzung des Bürstenraumes durch Bürstenabrieb weitgehend vermeidet und dabei ausserordentlich einfach im konstruktiven Aufbau ist.

Diese Aufgabe wird erfindungsgemäss durch die im Anspruch 1 gekennzeichnete Erfindung gelöst.

Die Vorteile der Erfindung, die insbesondere für Asynchronmaschinen bestimmt ist, gegenüber dem Bekannten sind insbesondere in folgendem zu sehen :

— Die Gasströmung wird definiert durch die Lauffläche der Schleifringe geführt, und zwar unmittelbar an den Stellen, wo die Verluste der Stromübertragung entstehen ;

— Durch Führung des Gases in den Isolierrohren werden alle Schleifringe gleich belüftet, die Gasmengenzuordnung ist eindeutig, die parallele Gasstromführung ist einfach überschaubar und berechenbar ;

— Durch den Einbau der Isolierrohre ergeben sich nur vergleichsweise geringe Eingriffe in bestehende Schleifringkonzepte, so dass grundsätzlich herkömmliche Anordnungen auf das erfindungsgemässe System umrüstbar sind ;

— Der Bürstenabrieb wird unmittelbar am Ort seiner Entstehung abgesaugt ;

— Sämtliche Isolierrohre führen zum gleichen Ventilator, was Platzeinsparung mit sich bringt.

Gemäss einer ersten Weiterbildung des Erfindungsgegenstandes sind die axialen Bohrungen in den Schleifringen als Durchgangsbohrungen ausgebildet, während die Isolierrohre an den dem Radialventilator abgewandten Ende geschlossen sind, in die axialen Durchgangsbohrungen um annähernd eine Schleifringbreite eintauchen und am eingetauchten Ende mit seitlichen, radial aussen gerichteten Oeffnungen versehen sind. Diese Ausführungsform zeichnet sich durch einfachen Aufbau und wirtschaftliche Fertigungsmöglichkeit aus.

Alternativ hierzu besteht jedoch die Möglichkeit, die axialen Bohrungen in dem an ein Isolierrohr anzuschliessenden Schleifring als Sakklochbohrungen auszuführen, die gegen den Radialventilator zu offen sind, in welche Sakklochbohrungen die Isolierrohre münden. Auch hier empfiehlt es sich, die Isolierrohre ganz in die Sacklochbohrungen einzubringen und die im Schleifringinnern gelegenen Isolierrohrenden mit seitlichen, radial nach aussen gerichteten Oeffnungen zu versehen.

Bei beiden vorgenannten Ausführungsformen sind die Isolierrohre in die axialen Bohrungen der Schleifringe eingepresst oder dort eingeklebt oder eingekittet.

Der vorzugsweise als Radialventilator ausgebildete Lüfter weist auf seiner den Schleifringen zugewandten Stirnfläche eine der Anzahl der Isolierrohre entsprechende Zahl von Bohrungen auf, in welche die Isolierrohre münden. Die Ventilatorflügel sind dabei so bemessen, dass sie bis unter die Unterkante der Isolierrohre reichen. Auf diese Weise werden Vordrallverluste eliminiert.

Statt eines Radialventilators kann auch eine Lüfteranordnung dienen, bei denen die den Schleifringen abgewandten Enden der Isolierrohre durch einem Tragring geführt sind und hinter dem Tragring radial nach aussen abgebogen sind. Auch radial nach aussen angeordnete, am radial innenliegenden Ende verschlossene Rohre, an welche seitlich die axial verlaufenden Isolierrohre angeschlossen sind, können an die Stelle eines Radiallüfters treten. Diese Ausführungsformen bringt zwar erhöhte Ventilatorverluste mit sich, sie sind jedoch bei Anwendungsfällen mit geringeren Kühlungsanforderungen wirtschaftlicher.

Die Erfindung wird nachstehend anhand in der Zeichnung dargestellter Ausführungsbeispiele näher erläutert.

In der Zeichnung zeigen :

Figur 1a, Figur 1b und Figur 1c verschiedene Längsschnitte durch ein Ausführungsbeispiel einer Schleifringanordnung mit Radiallüfter,

Figur 2 einen Radialschnitt durch die Anordnung nach nach Figur 1b längs deren Linie A-A

Figur 3 einen Längsschnitt durch ein Ausführungsbeispiel einer Schleifringanordnung, in welcher speziell gestaltete Isolierrohrenden die Funktion eines Radiallüfters übernehmen und

Figur 4 einen Radialschnitt durch die Anordnung nach Figur 3 längs deren Linie A'-A'.

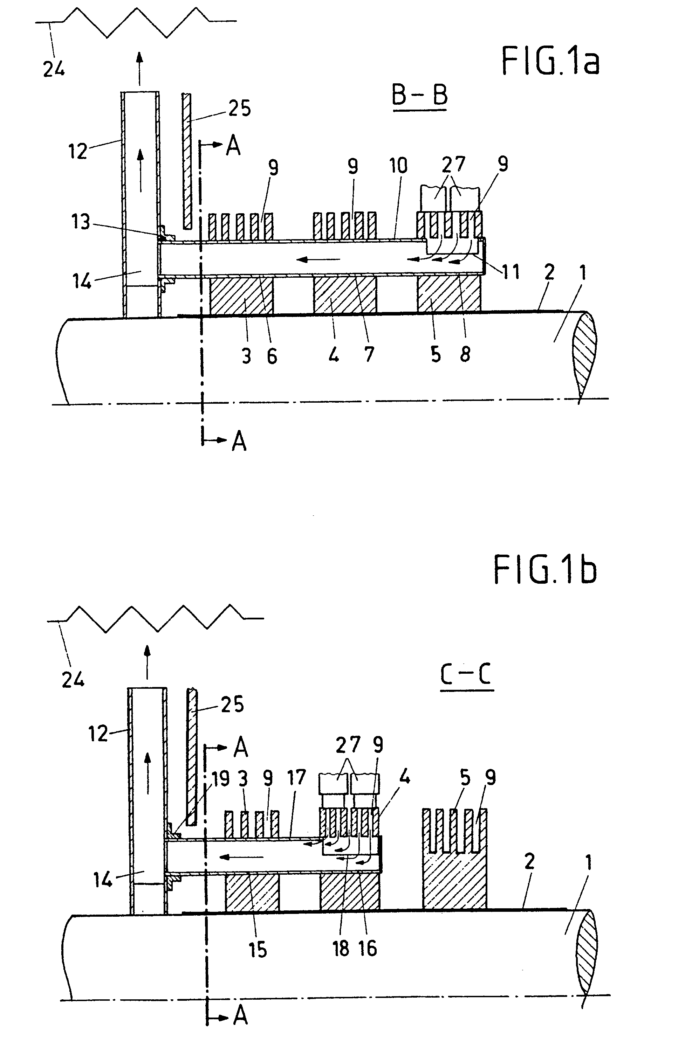

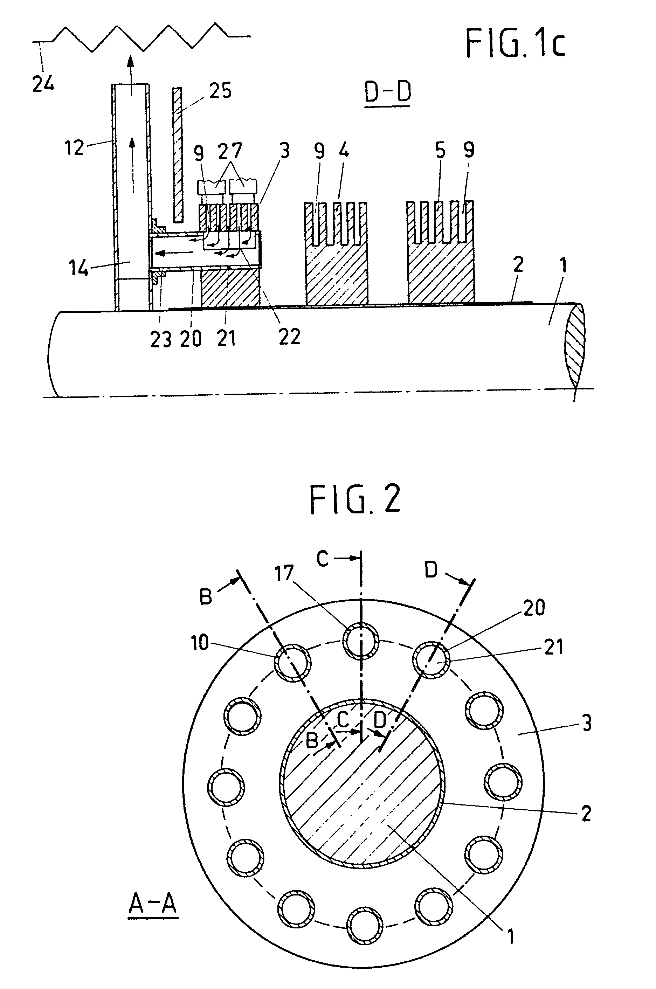

Gemäss Fig. 1a bis 1c sind auf einer Welle 1 einer elektrischen Maschine, im vorliegenden Fall einer Asynchronmaschine, unter Zwischenschaltung einer Isolation 2 drei Schleifringe 3, 4 und 5 befestigt. Die Schleifringe im zunächst zu betrachtenden Längsschnitt weisen sämtlich axial verlaufende, miteinander fluchtende Durchgangsbohrungen 6, 7 und 8 auf. Spiralig verlaufende Rillen 9 in der Oberfläche der Schleifringe 3, 4 und 5 reichen bis in diese Durchgangsbohrungen 6, 7 und 8 und schneiden diese an. Durch die Durchgangsbohrungen führt ein Isolierrohr 10, das an der äusseren Stirnfläche des Schleifrings 5 verschlossen ist. Im Bereich des Durchtritts des Isolierrohres 10 durch den Schleifring 5 weist das Isolierrohr 10 eine radial nach aussen gerichtete Oeffnung 11 auf. Ueber diese Oeffnung 11 ist somit der Innenraum des Isolierrohres 10 mit den Nuten 9 des Schleifrings 5 und damit mit dem Aussenraum verbunden. Wie aus dem Radialschnitt gemäss Fig. 2 hervorgeht, sind dem Schleifring 5 vier über den Umfang gleichmässig verteilte Isolierrohre 10 zugeordnet. Die Isolierrohre 10 münden an ihrem freien Ende in einen Radialventilator 12, der auf der Welle 1 befestigt ist, und sind dort in flanschartigen Ansätzen 13 gehalten, z. B. eingepresst, eingeklebt, eingekittet oder eingeschraubt. Durch Herunterziehen der Ventilatorflügel 14 des Radialventilators 12 bis unter die Unterkante des Isolierrohres 10 werden Vordrallverluste eliminiert.

Im Längsschnitt der Fig. 1b ist der kühlungsmässige Anschluss des Schleifrings 4 veranschaulicht. Die Schleifringe 3 und 4 sind mit axial verlaufenden, miteinander fluchtenden Durchgangsbohrungen 15 und 16 versehen, durch welche ein Isolierrohr 17 geführt ist. In Entsprechung zu Fig. 1a ist das Isolierrohr 17 an der dem Schleifring 5 zugewandten Stirnfläche des Schleifrings 4 verschlossen und weist im Bereich des Durchtritts durch den Schleifring 4 eine radial nach aussen gerichtete Oeffnung 18 auf. Auch die Isolierrohre 17 — es sind vier an der Zahl und gleichmässig über den Umfang verteilt (Fig. 2) — münden über flanschartige Ansätze 19 in den Radialventilator 12.

Der kühlungsmässige Anschluss des Schleifringes 3 gemäss Fig. 1c erfolgt in analoger Weise. Isolierrohre 20 sind in Axialbohrungen 21 des Schleifrings 3 angeordnet. Die Isolierrohre 20 sind an der dem Schleifring 4 zugewandten Stirnfläche des Schleifrings 3 verschlossen. Sie weisen im Bereich des Durchtritts durch den Schleifring 3 radial nach aussen gerichtete Oeffnungen 22 auf und münden über flanschartige Ansätze 23 in den Radialventilator.

Der Schleifring 5 weist vier axiale Durchgangsbohrungen auf, der Schleifring 4 deren acht, wovon vier zur Hindurchführung der Isolierrohre 10 dienen, der Schleifring 3 hat zwölf Durchgangsbohrungen, von denen — wie aus Fig. 2 hervorgeht — acht Bohrungen zum Hindurchführen der Isolierrohre 10 und 17 dienen.

In Fig. 1a ist ferner schematisch ein den Radiallüfter ringförmig umgebender Kühler 24 veranschaulicht, gegen den bei geschlossenen Maschinen die aus dem Radialventilator 12 austretende Luft geblasen wird. Der Kühler 24 kann auch rechteckig ausgebildet sein und/oder den Ventilator nur teilweise umgeben. Bei offenen Maschinen kann die erwärmte Kühlluft gegebenenfalls unter Zwischenschaltung von Filtern und/oder Jalousien direkt ins Freie geblasen werden. Zur Vermeidung von Kurzschlüssen in der Kühlgasführung kann der Ausströmraum des Radialventilators 12 vom Schleifringraum durch eine feststehende Blende 25 zwischen dem Schleifring 3 und dem Radialventilator 12 getrennt, was jedoch bei geeignter Anordnung des Kühlers nicht zwingend ist.

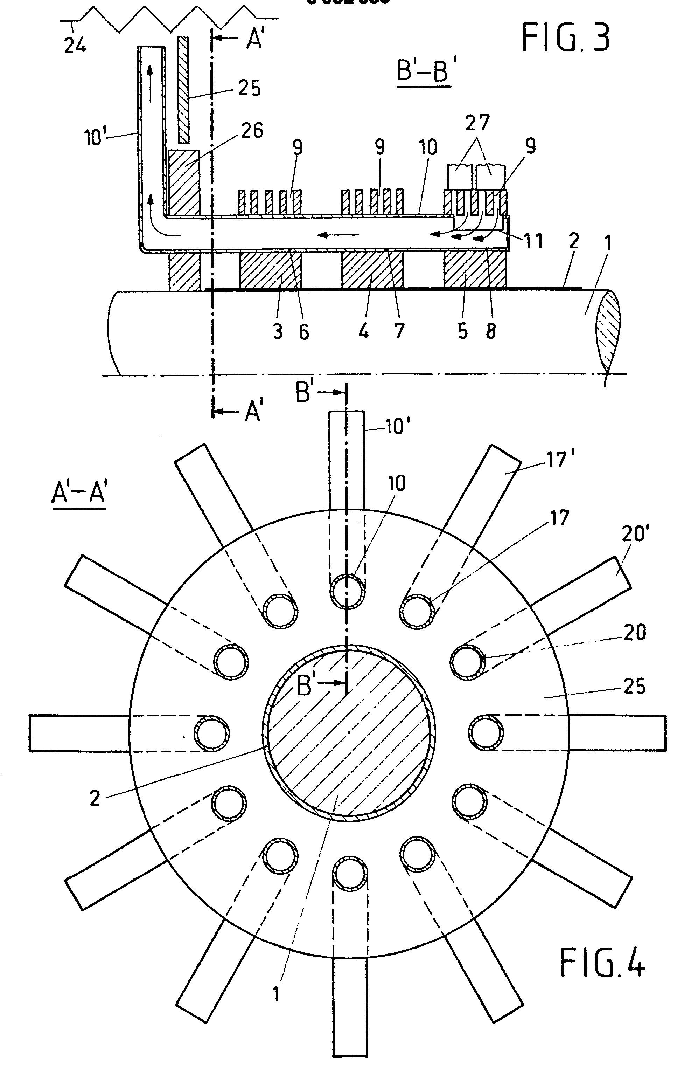

In Fig. 3 und Fig. 4 (in der die Trennwand 25 fortgelassen ist) ist eine zweite Ausführungsform des Erfindungsgegenstandes veranschaulicht, bei der an die Stelle eines Radialventilators eine im wesentlichen gleichwirkende Kühlgasfördereinrichtung tritt. Die Ausbildung der Schleifringe 3, 4 und 5, ihr Anschluss an die Isolierrohre 10, 17 und 20 erfolgt in der gleichen Weise wie bei der in den Figuren 1a, 1b, 1c und Fig. 2 Ausführungsform. Abweichend davon sind die den Schleifringen abgewandten Enden 10', 17' und 20' der Isolierrohre 10, 17 und 20 durch einen Tragring 26 geführt und hinter dem Tragring radial nach aussen abgebogen. Die Enden der Isolierrohre überragen den Tragring 26 radial nach aussen und sind dort offen. Analog zu Fig. 1a werden die aus den abgebogenen Enden der Isolierrohre austretenden Teilkühlgasströme gegen einen die Lüfteranordnung ringförmig umgebenden Kühler 24 geblasen oder gelangen (bei offenen Maschinen) ins Freie. Zur Vermeidung von Kurzschlüssen in der Kühlgasführung kann der Ausströmraum der Lüferanordnung vom Schleifringraum durch eine feststehende Trennwand oder Abschottung 25 in Höhe der Tragscheibe getrennt werden.

Im Betrieb der Maschine wird durch den Lüfter Kühlgas durch die Isolierrohre angesaugt. Das (kalte) Kühlgas tritt durch die Rillen bzw. Nuten 9 in der Oberfläche der Schleifringe und die radial nach aussen gerichteten Oeffnungen 11, 18 und 22 in den Isolierrohren 10, 17 und 20 in diese ein.

Da auch kaltes Kühlgas unter den Bürsten 27 abgesaugt wird, ergibt sich neben der Kühlwirkung auf die Bürsten und den Schleifring das Absaugen von Bürstenabrieb unmittelbar am Ort der Entstehung.

Aus Gründen einer übersichtlichen Darstellung wurde in der Zeichnung darauf verzichtet, die (elektrische) Stromzu- oder Stromabführung zu bsw. von den Schleifringen zu verdeutlichen. Bei den beschriebenen Ausführungsbeispielen erfolgt der elektrische Anschluss der Schleifringe auf der dem Lüfter abgewandten Seite der Schleifringanordnung, z. B. durch eine oder mehrere Stromschienen oder -bolzen je Schleifring, wobei die den Schleifringen 3 und 4 zugeordneten Stromschienen durch entsprechende Bohrungen in dem Schleifring 4 bzw. 5 isoliert hindurchgeführt sind.

**Ansprüche**

1. Schleifringanordnung für elektrische Maschinen, insbesondere Asynchronmaschinen, mit mindestens zwei nebeneinanderliegenden Schleifringen 3, 4, 5, die mehrere über den Umfang verteilte, einseitig geschlossene, axial verlaufende Kühlgasbohrungen (8, 16, 21) aufweisen, welche — getrennt für jeden Schleifring — jeweils über axial verlaufende Isolierrohre (10, 17, 20) die durch axial verlaufende, miteinander fluchtende Bohrungen (6, 7, 8-Fig. 1a ; 15, 16-Fig. 1b) in den jeweiligen Schleifringen führen, mit einem ausserhalb der Schleifringe angeordneten Lüfter verbunden sind, dadurch gekennzeichnet, dass der Lüfter als Radialventilator (12) ausgebildet ist oder als solcher wirkt, in dessen Einströmraum die Isolierrohre (10, 17, 20) münden, und dass die Schleifringe (3, 4, 5) mit umlaufenden oder spiralig verlaufenden Rillen oder Nuten (9) versehen sind, welche die axial verlaufenden Kühlgasbohrungen (8, 16, 21) anschneiden und damit das Kühlgas in die Rohre leiten.

2. Schleifringanordnung nach Anspruch 1, dadurch gekennzeichnet, dass die axialen Bohrungen in den Schleifringen (3, 4, 5) als Durchgangsbohrungen (8, 16, 21) ausgebildet sind, dass die Isolierrohre (10, 17, 20) an den dem Lüfter (12) abgewandten Enden geschlossen sind, dass die Isolierrohre (10, 17, 20) in die axialen Durchgangsbohrungen um annähernd eine Schleifringbreite eintauchen und am eingetauchten Ende mit seitlichen, radial nach aussen gerichteten Oeffnungen (11, 18, 22) versehen sind, welche Oeffnungen das Innere der Isolierrohre (10, 17, 20) mit den Nuten bzw. Rillen (9) in den Schleifringen (3, 4, 5) verbinden.

3. Schleifringanordnung nach Anspruch 1, dadurch gekennzeichnet, dass die axial verlaufenden Bohrungen in den Schleifringen (3, 4, 5) als Sacklochbohrungen ausgebildet sind, die gegen den Lüfter zu offen sind, in welche Sacklochbohrungen die Isolierrohre (10, 17, 20) münden, und dass die eingetauchten Enden der Isolierrohre mit seitlichen, radial nach aussen gerichteten Oeffnungen versehen sind, welche Oeffnungen das Innere der Isolierrohre (10, 17, 20) mit den Nuten bzw. Rillen (9) in den Schleifringen (3, 4, 5) verbinden.

4. Schleifringanordnung nach Anspruch 2 oder 3, dadurch gekennzeichnet, dass die Isolierrohre (10, 17, 20) in die axialen Bohrungen (8, 16, 21) eingepresst, eingeklebt oder eingekittet sind.

5. Schleifringanordnung nach einem der Ansprüche 1 bis 4, dadurch gekennzeichnet, dass die den Schleifringen (3, 4, 5) zugewandte Stirnfläche des Radialventilators (12) mit einer der Anzahl der Isolierrohre (10, 17, 20) entsprechenden Zahl von Bohrungen versehen ist, welche mit den axial verlaufenden Bohrungen in den Schleifringen fluchten, in welche Bohrungen die Isolierrohre (10, 17, 20) münden.

6. Schleifringanordnung nach Anspruch 5, dadurch gekennzeichnet, dass die Ventilatorflügel (14) des Radialventilators (12) radial nach innen bis unter die Unterkante der Isolierrohre (10, 17, 20) reichen.

7. Schleifringanordnung nach einem der Ansprüche 1 bis 4, dadurch gekennzeichnet, dass die den Schleifringen (3, 4, 5) abgewandten Enden der Isolierrohre (10, 17, 20) durch einen auf der Welle befestigten Tragring (26) geführt und hinter dem Tragring radial nach aussen abgebogen sind, diese abgebogenen Enden (10', 17', 20') offen sind und die radiale Höhe der Isolierrohrenden diejenige der Schleifringlauffläche übertrifft.

8. Schleifringanordnung nach einem der Ansprüche 1 bis 7, dadurch gekennzeichnet, dass dem Lüfter ein vorzugsweise ringförmiger Kühler (24) zugeordnet ist.

9. Schleifringanordnung nach einem der Ansprüche 1 bis 8, dadurch gekennzeichnet, dass zwischen dem Lüfter (12) und dem Schleifringraum eine feststehende Trennwand oder Abschottung (25) vorgesehen ist.

## Claims

1. A slipring arrangement for electric machines, in particular asynchronous machines, having at least two sliprings (3, 4, 5) which are located next to each other and which are provided with several axial cooling gas holes (8, 16, 21) which are distributed over the circumference and are closed on one side and which are connected — separately for each slipring — in each case via the axial insulating tubes (10, 17, 20), which lead through axial mutually aligned holes (6, 7, 8, Figure 1a; 15, 16, Figure 1b) in the respective sliprings, to a ventilator disposed externally to the sliprings, characterised in that the ventilator is constructed as a radial ventilator (12) or acts as such a ventilator, into the inlet space of which the insulating tubes (10, 17, 20) open, and that the sliprings (3, 4, 5) are provided with circumferential or spiral notches or grooves (9) which intersect the axial cooling gas holes (8, 16, 21) and in this manner conduct the cooling gas into the tubes.

2. A slipring arrangement according to Claim 1, characterised in that the axial holes in the sliprings (3, 4, 5) are constructed as continuous holes (8, 16, 21), that the insulating tubes (10, 17, 20) are closed at the ends turned away from the ventilator (12), that the insulating tubes (10, 17, 20) are inserted into the axial continuous holes by approximately one slipring width and are provided at the inserted end with lateral openings (11, 18, 22) which openings point radially outward and connect the inside of the insulating tubes (10, 17, 20) to the grooves or notches (9) in the sliprings (3, 4, 5).

3. A slipring arrangement according to Claim 1, characterised in that the axial holes in the sliprings (3, 4, 5) are constructed as blind holes which are open towards the ventilator and into which the insulating tubes (10, 17, 20) open and that the inserted ends of the insulating tubes are provided with lateral openings which point radially outward and connect the inside of the insulating tubes (10, 17, 20) to the grooves or notches (9) in the sliprings (3, 4, 5).

4. A slipring arrangement according to Claim 2 or 3, characterised in that the insulating tubes (10, 17, 20) are pressed, glued or cemented into the axial holes (8, 16, 21).

5. A slipring arrangement according to one of Claims 1 to 4, characterised in that the end face, turned towards the sliprings (3, 4, 5), of the radial ventilator (12) is provided with a number of holes which corresponds to the number of insulating tubes (10, 17, 20) and which holes are aligned with the axial holes in the sliprings into which holes the insulating tubes (10, 17, 20) open.

6. A slipring arrangement according to Claim 5, characterised in that the ventilator blades (14) of the radial ventilator (12) reach radially inward to below the lower edge of the insulating tubes (10, 17, 20).

7. A slipring arrangement according to one of Claims 1 to 4, characterised in that the ends, turned away from the sliprings (3, 4, 5), of the insulating tubes (10, 17, 20) run through a support ring (26), which is mounted on the shaft, and behind the support ring are bent radially outward, that these bent ends (10', 17', 20') are open and that the radial height of the insulating tube ends exceeds that of the slipring running surface.

8. A slipring arrangement according to one of Claims 1 to 7, characterised in that the ventilator is associated with a preferably annular cooler (24).

9. A slipring arrangement according to one of Claims 1 to 8, characterised in that between the ventilator (12) and the slipring space a fixed partition or bulkhead (25) is provided.

## Revendications

1. Montage de bagues collectrices pour machines électriques, en particulier des machines asynchrones, comportant au moins deux bagues collectrices (3, 4, 5) disposées l'une à côté de l'autre qui présentent plusieurs passages de gaz de refroidissement (8, 16, 21) axiaux, fermés d'un côté, répartis sur la circonférence qui, séparément pour chaque bague collectrice, sont raccordés à un ventilateur disposé à l'extérieur des bagues collectrices chaque fois par l'intermédiaire d'un tube isolant axial (10, 17, 20), ces tubes axiaux traversant des alésages axiaux alignés (6, 7, 8, Fig. 1a) ; (15, 16, Fig. 1b) ménagés dans les bagues collectrices respectives, caractérisé en ce que le ventilateur a la forme d'un ventilateur radial (12) ou fonctionne comme tel, les tubes isolants (10, 17, 20) débouchant dans l'espace d'admission de ce ventilateur et les bagues collectrices (3, 4, 5) étant pourvues de rainures ou de gorges circonférentielles ou hélicoïdales (9) qui recoupent les passages de gaz de refroidissement axiaux (8, 16, 21) et introduisent ainsi le gaz de refroidissement dans les tubes.

2. Montage de bagues collectrices suivant la revendication 1, caractérisé en ce que les alésages axiaux dans les bagues collectrices (3, 4, 5) ont la forme d'alésages de traversée (8, 16, 21), les tubes isolants (10, 17, 20) étant fermés à leurs extrémités opposées au ventilateur (12), les tubes isolants (10, 17, 20) s'enfonçant dans les alésages de traversée axiaux environ de la largeur d'une bague collectrice et étant pourvus, à leurs extrémités enfoncées, d'ouvertures latérales orientées radialement vers l'extérieur (11, 18, 22) qui raccordent l'intérieur des tubes isolants (10, 17, 20) aux gorges ou rainures (9) prévues dans les bagues collectrices (3, 4, 5).

3. Montage de bagues collectrices suivant la revendication 1, caractérisé en ce que les alésages axiaux prévus dans les bagues collectrices (3, 4, 5) ont la forme d'alésages borgnes qui sont ouverts en direction du ventilateur, les tubes isolants (10, 17, 20) s'ouvrant dans ces alésages borgnes et les extrémités enfoncées des tubes isolants étant pourvues d'ouvertures latérales orientées radialement vers l'extérieur qui raccordent l'intérieur des tubes isolants (10, 17, 20) aux gorges ou rainures (9) des bagues collectrices (3, 4, 5).

4. Montage de bagues collectrices suivant la revendication 2 ou 3, caractérisé en ce que les tubes isolants (10, 17, 20) sont pressés, collés ou cimentés dans les alésages axiaux (8, 16, 21).

5. Montage de bagues collectrices suivant l'une quelconque des revendications 1 à 4, caractérisé en ce que la surface frontale du ventilateur radial (12) tournée vers les bagues collectrices (3, 4, 5) est pourvue d'un nombre d'ouvertures correspondant au nombre des tubes isolants (10, 17, 20), ces ouvertures étant axialement en ligne avec les alésages axiaux prévus dans les bagues collectrices et les tubes isolants (10, 17, 20) débouchant dans ces ouvertures.

6. Montage de bagues collectrices suivant la revendication 5, caractérisé en ce que les ailes (14) du ventilateur radial (12) s'étendent radialement vers l'intérieur jusqu'en dessous du bord inférieur des tubes isolants (10, 17, 20)

7. Montage de bagues collectrices suivant l'une quelconque des revendications 1 à 4, caractérisé en ce que les extrémités des tubes isolants (10, 17, 20) opposées aux bagues collectrices (3, 4, 5) sont guidées par un anneau de support (26) fixé sur l'arbre et sont coudées radialement vers l'extérieur derrière l'anneau de support, ces extrémités coudées (10', 17', 20') étant ouvertes et la hauteur radiale des extrémités des tubes isolants dépassant celle de la surface des bagues collectrices.

8. Montage de bagues collectrices suivant l'une quelconque des revendications 1 à 7, caractérisé en ce qu'un refroidisseur (24), de préférence annulaire, est associé au ventilateur.

9. Montage de bagues collectrices suivant l'une quelconque des revendications 1 à 8, caractérisé en ce qu'une paroi de séparation ou cloison fixe (25) est prévue entre le ventilateur (12) et l'espace réservé aux bagues collectrices.

0 052 385

# FIG.1a

<u>B - B</u>

# FIG.1b

<u>C - C</u>

1

FIG.1c

D-D

FIG. 2

A-A

0 052 385

FIG. 3

FIG. 4